Europäisches Patentamt

European Patent Office

Office européen des brevets

(11) Numéro de publication: **0 402 200**
**A2**

## (12) DEMANDE DE BREVET EUROPEEN

(21) Numéro de dépôt: **90401443.8**

(22) Date de dépôt: **30.05.90**

(51) Int. Cl.⁵: **B29C 65/34, F16L 47/02, B29D 23/00, //B29L31:24**

(30) Priorité: **09.06.89 FR 8907646**

(43) Date de publication de la demande:
**12.12.90 Bulletin 90/50**

(84) Etats contractants désignés:
**AT BE CH DE DK ES FR GB IT LI NL SE**

(71) Demandeur: **BOULET-D'AURIA, TERLIZZI & CIE**
**3, Rue de l'Industrie**
**Monaco(MC)**

(72) Inventeur: **Boulet-D'Auria, Vincent Stanislas**
**32 Avenue du 3 Septembre**
**F-06320 Cap d'Ail(FR)**

(74) Mandataire: **Rodhain, Claude et al**
**Cabinet Claude Rodhain 30, rue la Boétie**
**F-75008 Paris(FR)**

(54) Elément d'électro-soudage en matière plastique conductrice et raccord d'électro-soudage pour éléments en matière plastique réalisé à l'aide de celui-ci.

(57) L'invention concerne un élément d'électro-soudage destiné à réaliser la liaison de deux éléments en matière plastique et constitué de matière plastique conductrice, soit de matière plastique conductrice intrinsèque soit de matière plastique conductrice extrinsèque.

Selon un mode de réalisation préféré, cet élément d'électro-soudage (1) comporte une partie d'électro-soudage constituée de deux manchons cylindriques (2) et (3) et une partie de thermorégulation constituée d'une partie centrale (4) reliant les deux manchons (2) et (3).

Le raccord d'électro-soudage destiné à relier deux éléments tubulaires en matière plastique peut être formé par surmoulage de l'élément d'électro-soudage par un machon en matière plastique pourvu de bornes de mise en tension.

## FIG.1

La présente invention concerne un procédé de fabrication d'un raccord d'électro-soudage destiné à relier deux éléments en matière plastique, et un raccord d'électro-soudage obtenu par la mise en oeuvre de ce procédé.

Les manchons électro-soudables sont notamment destinés à former un raccord d'éléments tubulaires en matière plastique, tels par exemple des canalisations de distribution de gaz, d'eau ou autres réalisées en général en polyéthylène.

La technique classique d'électro-soudage consiste à chauffer une surface de contact des pièces grâce à un fil chauffant noyé dans la pièce de raccordement et formant une résistance électrique, afin d'atteindre la température de soudage des matériaux. En général, de tels raccords sont réalisés par surmoulage par injection.

Depuis une dizaine d'années, des laboratoires japonais et américains ont mis au point les matériaux révolutionnaires que sont les polymères conducteurs intrinsèques. Ces polymères sont conducteurs grâce à l'introduction d'ions dopants (iode, sodium, mercure,...) qui favorisent le déplacement libre d'électrons le long des chaînes, c'est-à-dire la conduction du courant.

Ces matières plastiques ajoutent à leurs caractéristiques propres (qualités mécaniques, légèreté, facilité de mise en oeuvre et coût de fabrication...) leur performance de conductivité électrique qui peut être réglée par modification du taux de dopant.

Depuis, quelques applications ont été développées. Tout d'abord, ces matériaux permettent le stockage de l'énergie, par des piles ou batteries à électrodes en matière plastique ou entièrement en matière plastique ; actuellement, est commercialisée une pile à électrodes en polyaniline. Une autre application envisagée est la réalisation d'écrans d'affichage exploitant le changement de couleur de certains polymères soumis à une tension électrique. Une autre orientation concerne un fil moléculaire conducteur en polymère utilisé comme chaîne de transfert d'informations entre une électrode et des groupes fonctionnels sensibles greffés sur ce fil.

Par ailleurs, ont également été mises au point des matières plastiques conductrices extrinsèques, plus classiques qui sont chargées de poudre ou fibres métalliques ou de noir de carbone.

Le brevet français 2 586 036 (KAO CORPORATION et YOSHINO) décrit un procédé de préparation d'un polymère conducteur intrinsèque. Selon ce procédé, un monomère sous la forme d'un composé aromatique ou d'un dérivé de celui-ci et un électrolyte sont dissouts ou dispersés dans un milieu organique polaire, et une oxydation anodique électro-chimique dans la solution ou la dispersion résultante est réalisée en présence d'au moins un ion métallique, le dit ion métallique étant choisi parmi un ion cuivre, un ion d'argent bivalent, un ion de fer trivalent, un ion de manganèse trivalent, un ion ruthénium, un ion rhénium et un ion rhodium.

Le brevet français 2 586 133 (PROTAVIC) décrit quant à lui une composition polymère conductrice extrinsèque améliorée contenant du nickel finement divisé ; dans de telles compositions, la conductivité électrique est due essentiellement à des particules métalliques qui établissent entre elles un contact électrique, ces particules pouvant être en argent, en nickel, en aluminium, en cuivre...

La présente invention concerne une application nouvelle de ces matières plastiques conductrices intrinsèques ou extrinsèques. Elle concerne en effet un procédé de fabrication de raccords d'électro-soudage en réalisant un insert d'électro-soudage dans ces matériaux.

L'avantage principal de ce procédé réside dans sa facilité de mise en oeuvre et dans ses coûts de fabrication peu élevés. En effet comme le démontrent de nombreux brevets déposés dans ce domaine, la mise en place d'un fil chauffant classique en hélice dans ou sur une bobine en matière plastique pose de sérieux problèmes de fiabilité et de qualité de soudage.

L'inconvénient principal de tels procédés est le problème du risque de déplacement et de détente du fil chauffant avant et pendant le surmoulage.

En effet, le fil avant surmoulage n'est retenu en place que par sa tension à la surface de la bobine. Or, il peut se produire une imperfection de cette tension, par exemple à cause d'une erreur de l'opérateur lors de l'embobinage ou lors du stockage à cause d'une variation du diamètre du manchon due aux conditions atmosphériques ambiantes, en particulier à une humidité trop importante.

De plus, la tension à appliquer au fil, lors de son enroulement sur le manchon rainuré, est difficile à régler. En effet, il faut que le fil soit fermement tendu pour être logé de façon sûre au fond de la rainure hélicoïdale. Ceci étant, il ne faut pas que le fil soit surtendu, car, dans ce cas, son diamètre diminue et la résistivité finalement obtenue est supérieure à celle souhaitée, ce qui pose problème lors de l'électro-soudage.

Durant le surmoulage, le fil peut également être déplacé à cause des efforts dûs à la viscosité de la matière plastique de surmoulage.

Ces éventuels déplacements nuisent à la qualité de la soudure, entraînant une dispersion thermique non homogène. Ils risquent de plus d'entraîner la création de poches d'air dans la pièce de raccord, qui sont également préjudiciables pour la soudure.

Des inserts de chauffage sont également utilisés dans les pièces de raccordement, utilisées pour réaliser une dérivation grâce à une perforation in-situ d'une canalisation.

De telles pièces de raccordement sont en général en deux parties recevant la canalisation. La perforation est réalisée après soudure par chauffage de la canalisation à l'emplacement de la zone à perforer, ce chauffage étant obtenu au moyen d'une résistance électrique de chauffage.

De la même façon que dans le cas du manchon de raccordement, il a été cherché à réaliser un insert de chauffage préfabriqué.

En effet, selon l'art antérieur décrit par exemple dans le brevet français 2 171 223 (ROLLMAPLAST AG), un fil résistif gainé en forme de spirale ou autre, est pris dans la masse de la partie de selle par surmoulage.

Un insert préfabriqué est décrit, par contre dans le brevet français 2 519 578 (INNOVATION TECHNIQUE SAM) ; cet insert est formé d'une plaquette d'épaisseur relativement faible moulée et comprenant une gorge dans laquelle est mise en place le fil chauffant en forme de spirale ; cet insert est destiné à être incorporé à la face intérieure de la selle, de préférence pendant le moulage de celle-ci.

Comme le démontrent ces documents antérieurs, la mise en place du fil chauffant en spirale, dans ce cas, posent également des problèmes de fiabilité et de qualité de soudage.

En effet, les problèmes de déplacement, de détente et de réglage, du fil chauffant déjà mentionnés au sujet des bobines d'électro-soudage se posent également.

De plus, grâce au procédé conforme à l'invention, le raccord devient auto-fusible, c'est-à-dire que, par un agencement très simple, la conduction du courant est interrompue, automatiquement, lorsque l'énergie nécessaire à la soudure a été dissipée.

Dans les raccords d'électro-soudage actuels, les dispositifs d'interruption de conduction sont relativement complexes.

Selon le brevet français 2 572 327 (TOUTELECTRIC SAM MC), un dispositif pour le contrôle du temps de soudage comporte un relais monté dans un circuit principal, à enclenchement manuel et à déclenchement commandé par un micro-interrupteur, lui-même commandé par la pression de la matière en fusion se dilatant au cours de l'opération de soudage. Ces micro-interrupteurs sont disposés dans des puits voisins des bornes de mise en tension et creusés dans la paroi du manchon ou de la selle jusqu'au voisinage des enroulements. Ce dispositif pour le contrôle du temps de soudage s'adapte aux manchons de raccordement d'éléments tubulaires, et également aux selles de raccordement de dérivation par perforation d'un élément tubulaire.

Selon le brevet européen 229 743 (GEBERIT AG) le raccord est pourvu à côté de chaque borne d'un manchon dans lequel est mis en place un indicateur de température en forme de disque mince qui est revêtu d'un revêtement coloré de couleurs variables selon la température. Cet indicateur de température coopère avec un capteur optique qui interrompt l'alimentation en courant lorsque ce disque est d'une couleur déterminée.

Suivant le brevet européen 93 821 (GEBERIT AG) le fil conducteur est pourvu d'un interrupteur dimensionné de façon à rompre le fil, lorsque l'énergie nécessaire au soudage a été transmise.

Contrairement à ces agencements complexes d'interruption de l'électro-soudage, la présente invention propose un système de thermorégulation de la soudure particulièrement simple, ne nécessitant la mise en place d'aucun dispositif complémentaire et pouvant être réalisé simplement lors du moulage de l'insert d'électro-soudage, puisque ces éléments thermorégulateurs sont constitués de parties intégrantes de celui-ci.

La présente invention concerne donc un élément d'électro-soudage destiné à réaliser la liaison de deux éléments en matière plastique et remarquable en ce qu'il est constitué de matière plastique conductrice ; cette matière plastique conductrice peut être une matière plastique conductrice intrinsèque, c'est-à-dire un polymère dopé d'ions (iode, sodium, mercure...) ; elle peut être également une matière plastique conductrice extrinsèque c'est-à-dire une matière plastique chargée de poudres ou fibres métalliques ou de noir de carbone...

L'invention supprime donc toute nécessité d'insertion d'un fil chauffant ou équivalent, la conduction du courant étant réalisée directement par le matériau constituant l'élément d'électro-soudage.

L'invention supprime également toute nécessité d'installation de dispositifs d'interruption du courant supplémentaire puisque l'élément comporte au moins une partie de thermorégulation intégrée, réalisée dans le même matériau.

De plus la présente invention propose un agencement de bornes de mise en tension particulièrement simple et avantageux. En effet, ces bornes fournies, en tant que pièces détachées, se mettent en place après positionnement des éléments à souder et des éléments d'électro-soudage, par simple introduction, par exemple par vissage, leur extrémité étant introduite dans l'élément d'électro-soudage en matière plastique conductrice et réalisant ainsi la conduction du courant.

Par ce mode d'agencement des bornes, et par l'absence de fil chauffant, la présente invention supprime donc toute nécessité de connexion complexe et délicate du fil chauffant avec les bornes de mise en tension.

Selon un premier mode de réalisation préféré, destiné en particulier à la liaison d'éléments tubulaires, l'élément d'électro-soudage comporte une partie d'électro-soudage constituée d'au moins un manchon et de préférence de deux manchons cylindriques et une partie de thermorégulation constituée d'une partie centrale reliant les deux manchons d'électro-soudage et agencée de façon à faire circuler le courant de manière homogène dans la matière conductrice des manchons.

De préférence, cette partie de régulation est constituée d'au moins une bande reliant les deux manchons.

Selon un second mode de réalisation préféré, destiné en particulier à la réalisation d'une dérivation par perforation, l'élément d'électro-soudage comprend une partie d'électro-soudage en forme de plaquette semi-circulaire à laquelle sont reliées les parties destinées à recevoir les bornes de mise en tension par l'intermédiaire de parties de thermorégulation, de préférence constituées de bandes situées selon des arcs de cercle.

L'invention concerne également l'application de cet élément d'électro-soudage à la réalisation d'un raccord d'électro-soudage d'éléments tubulaires et à la réalisation d'un raccord d'électro-soudage destiné à la réalisation d'une dérivation par perforation d'un élément tubulaire in situ.

L'invention est exposée ci-après plus en détail à l'aide de figures représentant seulement des modes d'exécution préférés.

- la figure 1 représente une vue en perspective d'un élément d'électro-soudage conforme à l'invention destiné en particulier à la liaison d'éléments tubulaires en matière plastique,

- la figure 2 représente en perspective un raccord d'électro-soudage d'éléments tubulaires en matière plastique pourvu du précédent élément.

- la figure 3 représente en perspective une variante d'un élément d'électro-soudage conforme à l'invention, destiné en particulier à la liaison d'éléments tubulaires,

- la figure 4 est une vue en perspective partielle du raccord d'électro-soudage réalisé à l'aide du précédent élément,

- la figure 5 est une vue de dessus d'un élément d'électro-soudage conforme à l'invention destiné en particulier à être utilisé dans un raccord d'électro-soudage pour la dérivation par perforation d'un élément tubulaire,

- la figure 6 est une vue en coupe d'un exemple d'application d'un élément d'électro-soudage conforme à l'invention,

- la figure 7 est une vue en coupe partielle d'une borne de mise en tension conforme à l'invention.

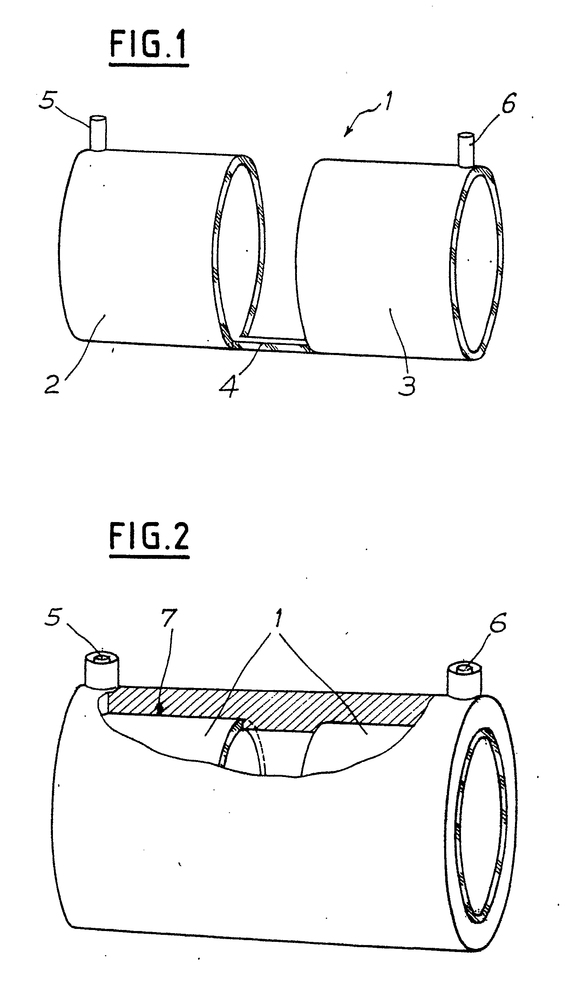

Les figures 1 et 2 représentent un premier mode de réalisation préféré de l'élément conforme à l'invention.

L'élément d'électro-soudage 1 est réalisé en matière plastique conductrice ; cette matière plastique est soit une matière plastique conductrice intrinsèque, à savoir un polymère dopé d'ions (iode, sodium, mercure...), soit une matière plastique conductrice extrinsèque, à savoir chargée de poudre ou de fibres métalliques ou de noir de carbone...

L'élément 1 comporte deux parties d'électro-soudage 2 et 3 constituées de deux manchons cylindriques d'épaisseur ou de composition adéquate pour dégager les calories nécessaires à la soudure des deux tubes destinés à être reliés. Ces deux parties d'électro-soudage 2 et 3 sont reliées par une partie centrale 4 formant la partie de thermorégulation. L'élément 1 est également pourvu de deux parties 5 et 6 destinées à la mise en place de bornes de mise en tension.

La partie de thermorégulation 4 est agencée de façon à faire circuler le courant de manière homogène dans la matière fusible des manchons. Pour cela, elle est formée d'une bande de matière fusible reliant les deux manchons 2 et 3 et elle est située dans le prolongement des manchons coaxiaux, le long de la génératrice diamétralement opposée à celle où sont situées les parties 5 et 6 de mise en place des bornes de mise en tension. De plus ces dimensions sont déterminées pour que lorsque les calories dégagées par conduction de la matière plastique conductrice sont suffisantes pour réaliser la fusion et donc la soudure des surfaces en contact de l'élément et des tubes à raccorder, cette bande 4 se détruise et par ce fait coupe le circuit formé entre les bornes et interrompe automatiquement le processus d'électro-soudage.

La figure 2 représente l'application préférée de cet élément 1. L'élément forme un insert d'électro-soudage 1, sur lequel est surmoulé par injection un manchon extérieur 7. Les éléments tubulaires destinés à être reliés sont donc introduits de chaque côté du raccord, puis les bornes de mise en tension sont mises en place dans les parties 5 et 6, et l'agencement est alors prêt pour la réalisation de l'électro-soudage.

La matière plastique conductrice étant injectable, on peut donner toutes sortes de formes à l'insert.

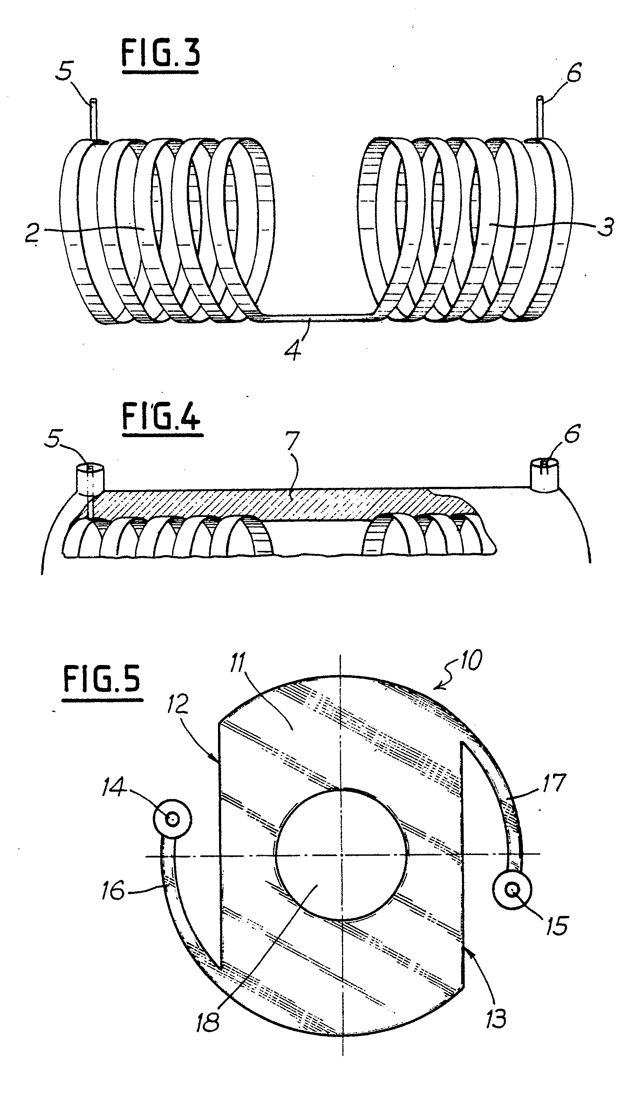

Les figures 3 et 4 représentent une variante de réalisation de l'élément d'électro-soudage et du raccord d'électro-soudage décrit ci-dessus.

Selon cette variante, comme on peut le voir sur la figure 3, les manchons cylindriques ne sont pas pleins et sont constitués d'une bande de matière plastique conductrice disposée en hélice. La même bande constitue alors les deux manchons et la partie centrale rectiligne de thermorégulation 4. Selon l'exemple représenté sur la figure 3, le sens des hélices 2 et 3 est opposé, mais ces deux hélices 2 et 3 peuvent également être enroulées dans le même sens.

La bande de thermorégulation 4 est agencée et dimensionnée de la même façon que dans le cas de l'agencement représenté sur la figure 1.

La figure 4 représente partiellement le raccord d'électro-soudage pour éléments tubulaires réalisé à l'aide d'un tel élément d'électro-soudage 1, avec surmoulage d'un manchon extérieur 7.

La figure 5 représente un second mode de réalisation préférée de l'élément d'électro-soudage selon la presente invention.

Il est également réalisé en matière plastique conductrice ; cette matière plastique est soit une matière plastique conductrice intrinsèque, à savoir un polymère dopé d'ions (iode, sodium, mercure...), soit une matière plastique conductrice extrinsèque à savoir chargée de poudre ou de fibres métalliques ou de noir de carbone...

L'élément d'électro-soudage 10 représenté vu de dessus est constitué d'une plaquette de matière plastique conductrice et il est de forme générale semi-circulaire. Il comporte une partie d'électro-soudage 11 constitué d'un disque de forme circulaire tronqué selon deux droites parallèles 12 et 13. Les parties de mise en place des bornes de mise en tension 14, 15 sont situées de façon diamétralement opposée dans ladite partie tronquée et sont reliées au disque tronqué 11 par deux parties de thermorégulation 16 et 17 constituées chacune d'une bande de matière plastique conductrice agencée selon la périphérie du cercle formant la périphérie générale de l'élément 10.

Ces bandes de thermorégulation 16 et 17 sont agencées de façon à faire circuler le courant de manière homogène dans la matière fusible de la plaquette 11. Pour ce faire, elles sont symétriques par rapport au centre du disque. De plus elles sont dimensionnées pour que lorsque les calories dégagées par conduction de la matière plastique conductrice sont suffisantes pour réaliser la fusion et donc la soudure des surfaces en contact de l'élément 11 et des éléments à raccorder, ces parties 16 et 17 se détruisent et par ce fait coupent le circuit formé entre les bornes positionnées en 14 et 15 et interrompent automatiquement le processus d'électro-soudage.

L'élément d'électro-soudage 11 est également pourvu d'un orifice central 18 correspondant à l'emplacement central de réalisation de la perforation de dérivation, où la soudure n'est pas nécessaire.

L'élément d'électro-soudage 10 est destiné à la réalisation d'un raccord d'électro-soudage pour la réalisation d'une dérivation par perforation d'un élément tubulaire en matière plastique. Pour ce faire, l'élément 11 forme un insert sur lequel est surmoulée la partie de raccordement formant la selle, elle même destinée à être fixée sur là canalisation à perforer.

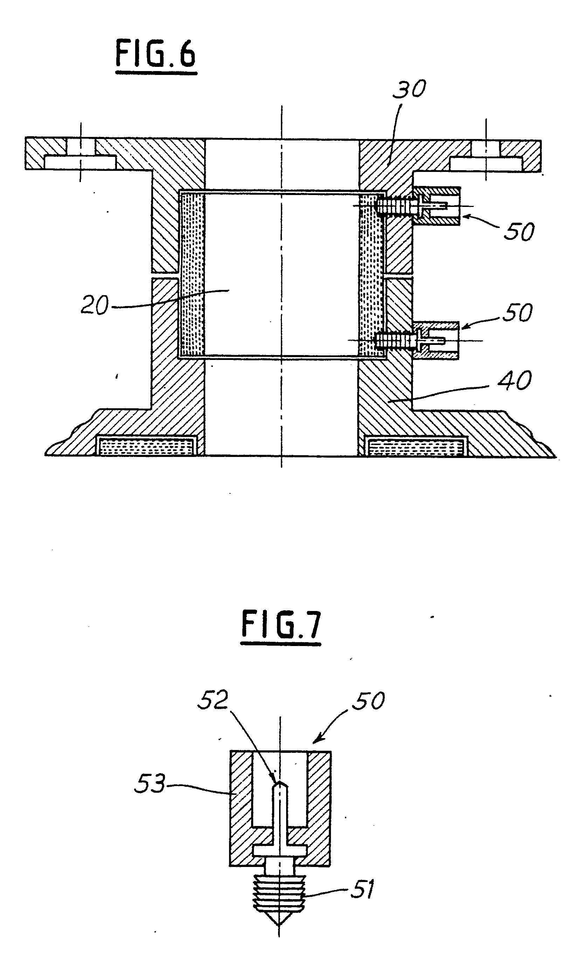

La figure 6 représente en coupe un autre exemple d'agencement d'un élément d'électro-soudage conforme à l'invention.

Le manchon 20 est destiné à relier deux pièces 30, 40 qui pour ce faire comportent à leur partie respective devant être reliée un évidement dans lequel est rapporté l'élément d'électro-soudure 20 en forme de simple manchon.

Deux bornes de mise en tension 50 (qui seront décrites plus précisément ci-dessous) sont vissées dans ces parties de liaison des pièces 30 et 40 et à une certaine profondeur de l'épaisseur du manchon d'électro-soudage 20 afin de réaliser la mise en tension et donc l'électro-soudage.

Ce procédé de mise en place de l'insert d'électro-soudage peut également être appliqué à la réalisation de raccords d'éléments tubulaires ou de dérivation tels que décrits ci-dessus. En effet, ces raccords peuvent être réalisés sans processus de surmoulage. L'insert d'électro-soudage est alors logé ou inséré par emboîtement ou équivalent, dans un manchon extérieur 7 ou dans une selle préfabriqués. Dans ce dernier cas, les éléments d'électro-soudage, les manchons extérieurs et les selles de dérivation sont fabriqués de façon modulaire et sont agencés les uns avec les autres, in situ, lors de la réalisation de la soudure.

Enfin, et c'est le mode de réalisation préféré, car le plus économique, l'insert et l'élément extérieur peuvent être injectés par une seule opération, dans un moule à noyau extensible. Ce type de réalisation peut faire chuter le prix de revient d'un tel produit de plus de 50%.

La figure 7 représente un mode de réalisation de borne de mise en tension 50. Cette dernière est destinée à être introduite dans la partie extérieure enveloppant l'élément d'électro-soudage et également dans l'élément d'électro-soudage afin de permettre le passage du courant dans ledit élément d'électro- soudage. De préférence cette introduction se fera par vissage et pour ce faire la borne comporte une partie autoforante 51 pourvue d'une pointe et d'un filetage, afin de pouvoir être vissée directement dans la matière plastique des éléments. Elle comporte en outre, une partie 52 classique de connexion et une enveloppe classique 53, de préférence en matière plastique.

De façon générale, dans le cas d'une matière plastique conductrice extrinsèque, la nature de la charge est définie en fonction de l'énergie nécessaire et cette charge peut être répartie de façon non uniforme, par exemple de façon moins dense en surface qu'à l'intérieur de l'élément afin de réguler selon le besoin la conduction.

## Revendications

1) Elément d'électro-soudage destiné à réaliser la liaison de deux éléments en matière plastique et notamment réalisé par injection pour coopérer avec un élément extérieur en matière plastique, caractérisé en ce qu'il est constitué de matière plastique conductrice.

2) Elément d'électro-soudage selon la revendication 1, caractérisé en ce qu'il est constitué d'une matière plastique conductrice intrinsèque.

3) Elément d'électro-soudage selon la revendication 1, caractérisé en ce qu'il est constitué d'une matière plastique conductrice extrinsèque.

4) Elément d'électro-soudage selon l'une quelconque des revendications précédentes, caractérisé en ce qu'il comporte au moins une partie de thermorégulation intégrée.

5) Elément d'électro-soudage selon l'une quelconque des revendications précédentes, caractérisé en qu'il comprend au moins une partie d'électro-soudage constituée d'un manchon cylindrique (2, 3, 20).

6) Elément d'électro-soudage selon la revendication 5, caractérisé en ce qu'il comprend une partie de thermorégulation constituée d'une partie centrale (4) reliant deux manchons d'électro-soudage (2) et (3).

7) Elément d'électro-soudage selon la revendication 6, caractérisé en ce que la partie de thermorégulation est constituée d'au moins une bande en matière plastique conductrice (4) reliant les manchons d'électro-soudage (2) et (3).

8) Elément d'électro-soudage selon l'une quelconque des revendications 5 à 7, caractérisé en ce qu'il comporte des parties destinées à recevoir des bornes de mise en tension (5) et (6), aux extrémités opposées des manchons.

9) Elément d'électro-soudage selon la revendication 8, caractérisé en ce que la bande de thermorégulation (4) est située dans le prolongement des manchons le long de la génératrice diamétralement opposée à celle où sont situées les parties (5) et (6) de mise en place des bornes.

10) Elément d'électro-soudage selon l'une quelconque des revendications 5 à 9, caractérisé en ce que les manchons cylindriques sont pleins.

11) Elément d'électro-soudage selon l'une quelconque des revendications 5 à 9, caractérisé en ce que les manchons cylindriques sont constitués d'une bande disposée en hélice.

12) Elément d'électro-soudage selon l'une quelconque des revendications 1 à 4, caractérisé en ce qu'il comprend une partie d'électro-soudage en forme de plaquette semi-circulaire (11).

13) Elément d'électro-soudage selon la revendication 12, caractérisé en ce que la plaquette (11) a la forme d'un disque tronqué par deux droites parallèles.

14) Elément d'électro-soudage selon la revendication 13, caractérisé en ce qu'il comprend des parties destinées à recevoir les bornes de mise en tension (14, 15) situées dans la partie tronquée de la plaquette (11) et diamétralement opposées.

15) Elément d'électro-soudage selon la revendication 14, caractérisé en ce que les parties de thermorégulation sont constituées de bandes de matière plastique conductrice prolongeant la plaquette dans sa partie tronquée selon des arcs de cercle et reliant la plaquette (11) aux parties destinées aux bornes de mise en tension (14, 15).

16) Borne de mise en tension destinée à être associée à un élément selon l'une quelconque des revendications 1 à 15, caractérisée en ce qu'elle comprend une partie de conduction comportant un moyen d'introduction mécanique dans la matière plastique.

17) Borne selon la revendication 16, caractérisée en ce que ledit moyen d'introduction mécanique est un filetage (51) autoforant.

18) Raccord d'électro-soudage destiné à relier deux éléments tubulaires en matière plastique, caractérisé en ce qu'il comprend un insert conforme à l'une quelconque des revendications 5 à 11, un manchon extérieur (7) en matière plastique et des bornes de mise en tension.

19) Raccord selon la revendication 18, caractérisé en ce que le manchon extérieur (7) est surmoulé sur l'insert.

20) Raccord selon la revendication 18, caractérisé en ce que l'insert et le manchon extérieur (7) sont moulés dans un même moule comportant un noyau extensible en une seule opération.

21) Raccord selon la revendication 18, caractérisé en ce que le manchon extérieur (7) est préfabriqué et comporte des parties de réception de l'insert d'électro-soudage.

22) Raccord d'électro-soudage destiné à la réalisation d'une dérivation par perforation d'un élément tubulaire en matière plastique caractérisé en ce qu'il comprend un insert conforme à l'une quelconque des revendications 12 à 15, d'une partie extérieure supérieure formant selle et d'une partie extérieure inférieure. ·

23) Raccord selon la revendication 22, caractérisé en ce que la selle en matière plastique est surmoulée sur l'insert.

24) Raccord selon la revendication 22, caractérisé en ce que la selle est préfabriquée et comporte une partie de réception de l'insert.

# FIG.1

# FIG.2

## FIG.3

## FIG.4

## FIG.5

## FIG.6

## FIG.7